# EUROPEAN PATENT APPLICATION

(11) **EP 4 467 927 A1**
(43) Date of publication of application: **27.11.2024**
(21) Application number: 23275081.0
(22) Date of filing: 25.05.2023
(51) Int. Cl.: G01B 17/02, G01N 29/07

(54) **ULTRASOUND METHOD AND APPARATUS**

(71) Applicant: Renishaw PLC, Wotton-under-Edge, Gloucestershire GL12 8JR (GB)
(72) Inventor: The designation of the inventor has not yet been filed
(74) Representative: Rolfe, Edward William

(57) **Abstract**

A method for determining information about a step in the depth of an object, between relatively shallow and deep portions of the object, as measured by an ultrasound inspection device taking ultrasound echo measurements from a front surface of the object, the method comprising: taking a set of ultrasound echo measurement data that extends across the step in the depth of the object and using, from therewithin, ultrasound step-echo measurement data which was created by the step in the depth of the object to determine information about the step in the depth of the object.

## Description

The present invention relates to methods for inspecting an object and associated apparatus, in particular those involving ultrasound inspection devices which acquire ultrasound measurements of an object.

It is known to measure the quality and/or dimensions of manufactured objects to ensure they conform to quality requirements/tolerance. In the case of high value components, such as aerospace turbine blades, the external form of an object can be measured to sub-micron accuracy using a surface contact (or non-contact) probe mounted on a coordinate measuring machine (CMM). Examples of techniques for measuring the positions of multiple points on the surface of an object using a CMM equipped with a surface contact or non-contact probe are described in US5189806, WO2009/024783 and WO2009/024757.

In addition to surface measurements, it is often necessary to measure the thickness of a part, internal features/structure of an object, and/or to identify internal faults, and it is known to use an ultrasound inspection device for doing so. Such ultrasound inspection devices emit an ultrasound pulse, which is projected into the object being inspected, and echoes of the pulse are recorded by the ultrasound inspection device. The time delay between echoes of the pulse can provide valuable information about the object. Such systems can be referred to as a "pulse-echo" ultrasound inspection device.

Known ultrasound inspection devices include those that require the object to be inspected being submerged within a liquid (e.g. water), and those that do not require the object to be submerged. In a submerged system, the liquid provides good acoustic coupling with the object but the arrangement is expensive and complex, especially for larger objects. An example of an ultrasonic immersion system is described in GB2440959. Ultrasound inspection devices can be handheld, but it has been described previously how such devices may be mounted to the quill of a positioning apparatus, such as a CMM. For example, US2009/0178482 and WO2016/051147 describe an ultrasound inspection device mounted to the quill of a CMM. An ultrasound inspection device can be referred to as an ultrasound probe.

WO2020/174214 describes a method of calibrating an ultrasound probe to determine its axis of optimum signal (i.e. its "ultrasound axis") such that it can be determined how to subsequently orient the probe to achieve a desired signal during object inspection.

Typically, ultrasound inspection devices employ one of three well-known modes of operation from which time delay information can be extracted from an ultrasound signal measured. These different modes are typically termed Mode-1, Mode-2 and Mode-3 respectively. In Mode-1, the time delay measurement is made between the initial excitation pulse and the first echo/reflection from a back-wall feature of the object. In Mode-2 gauging, the time delay measurement is made between an echo/reflection from the front-surface and the first echo from a back-wall feature of the object. In Mode-3 gauging, the time delay measurement is made between two or more successive echoes from a back-wall feature of the obj ect.

The present invention relates to an improved technique for finding information about a step in the depth of an object between relatively shallow and deep portions of the object as measured by an ultrasound inspection device taking ultrasound echo measurements from a front surface of the object.

According to a first aspect of the invention, there is provided a method for determining information about a step in the depth of an object, between relatively shallow and deep portions of the object, as measured by an ultrasound inspection device taking ultrasound echo measurements from a front surface of the object, the method comprising: taking a set of ultrasound echo measurement data that extends across the step in the depth of the object and using, from therewithin, ultrasound step-echo measurement data which was created by the step in the depth of the object to determine information about the step in the depth of the object. Accordingly, in other words, the method comprises taking a set of ultrasound echo measurement data that extends across the step in the depth of the object and using ultrasound step-echo measurement data within that set to determine information about the step in the depth of the object (wherein ultrasound step-echo measurement data comprises ultrasound echo measurement data created by the step).

The inventor identified the existence of such ultrasound step-echoes (created by such a step in the depth of the object), and identified that such ultrasound step-echoes can be used to determine information about the step; in particular such step-echoes are useful for determining the location of the step, but can also be used for instance to determine other information about the step, such as, for example the sum of the relatively shallow and deep section thicknesses. Such step-echo measurement data could also be used to determined information about the geometry of the step, e.g. from the relative amplitudes of the Primary Step-Echo (explained below), the first-generation back-wall echo of the relatively shallow section and the first-generation back-wall echo of the relatively deep section of the echo. Furthermore, for example, the step-echo measurement data for the object could be compared to nominal step-echo measurement data (or step-echo measurement data of a reference object) in order to compare the step to that of the nominal (or reference) data/obj ect.

The inventor identified that the most useful step-echoes have a time of arrival at the ultrasound inspection device approximately equal to that of: ToA(BW₁ₛ) + ToA(BW_{1d}) (wherein ToA(BW₁ₛ) is the time of arrival at the ultrasound inspection device of a first-generation ultrasound echo created by said relatively shallow portion and wherein ToA(BW_{1d}) is the time of arrival at the ultrasound inspection device of a first-generation ultrasound echo created by said relatively deep portion) can be particularly useful step-echoes for determining information about the step. Such step-echoes could be referred to as "Primary Step-Echoes". In particular, as explained in more detail below in connection with the specific embodiments, such "Primary Step-Echoes" can have a larger amplitude compared to other "Subordinate Step-Echoes" created by the step in the depth of the object. As mentioned, the most useful step-echoes are those that have a time of arrival at the ultrasound inspection device approximately equal to that of ToA(BW₁ₛ) + ToA(BW_{1d}). In this context, this means step-echoes that arrive within a time frame of: 0.75(ToA(BW₁ₛ) + ToA(BW_{1d})) to 1.25(ToA(BW₁ₛ) + ToA(BW_{1d})), more preferably within a time frame of 0.8(ToA(BW₁ₛ) + ToA(BW_{1d})) to 1.2(ToA(BW₁ₛ) + ToA(BW_{1d})), especially preferably within a time frame of 0.85(ToA(BW₁ₛ) + ToA(BW_{1d})) to 1.15(ToA(BW₁ₛ) + ToA(BW_{1d})).

The method can comprise identifying, from a set of ultrasound echo measurement data that extends across the step in the depth of the object, ultrasound step-echo measurement data which was created by the step in the depth of the object. The method can then comprise using said identified ultrasound step-echo measurement data to determine information about the step in the depth of the object.

As will be understood, an ultrasound echo measurement can comprise a measure of the signal received by an ultrasound inspection device over a period of time following emission of an ultrasound pulse into the object. Optionally, in those embodiments in which the ultrasound inspection device comprises a delay line an ultrasound echo measurement could be a measure of the signal received by an ultrasound inspection device between the first (DL₁) and second (DL₂) delay line echoes (i.e. the first and second echoes created by the ultrasound inspection device's delay line). As will be understood, the delay line could comprise a gap (e.g. a fluid gap) between the transducer (for emitting and detecting ultrasound energy/an ultrasound pulse and the echoes thereof) and the front surface of the object, and/or could comprise a rigid or a deformable coupling element. As will be understood, some ultrasound inspection devices are configured such that the transducer (for emitting and detecting ultrasound energy/an ultrasound pulse and the echoes thereof) directly contacts the front surface of the object during a measurement, in which case a delay line is not present. As will be understood, the measure of the signal received by an ultrasound probe could be a measure of the ultrasound energy (e.g. a measure of the amplitude of the ultrasound energy) received by an ultrasound probe.

The set of ultrasound echo measurement data could be historical ultrasound echo measurement data, e.g. obtained by an ultrasound inspection device at a different time to execution of the method of the invention. Accordingly, the method could comprise receiving/retrieving the set of ultrasound echo measurement data from a memory device, input device and/or remote device. Optionally, the method comprises the step of using an ultrasound inspection device to obtain said set of ultrasound echo measurement data that extends across the step in the depth of the object. Accordingly, the set of ultrasound echo measurement data could be current/live ultrasound echo measurement data. The ultrasound inspection device could be calibrated (e.g. prior to, or as part of the method of the invention). In particular, the ultrasound inspection device could be calibrated such that the position of its contact surface is known within the positioning apparatus positioning volume. In particular, the ultrasound probe could be calibrated such that the position of its ultrasound axis is known within the positioning apparatus positioning volume. The ultrasound inspection device could be calibrated such that orientation of the ultrasound axis is known (e.g. using a technique such as that described in WO2020/174214).

As will be understood, the ultrasound energy/pulse could be emitted by the same ultrasound inspection device that detects the ultrasound echoes. The set of ultrasound echo measurement data could be obtained by a "pulse-echo" ultrasound inspection device. Optionally, the ultrasound inspection device used to obtain the set of ultrasound echo measurement data comprises a single transducer for emitting and detecting ultrasound energy/an ultrasound pulse and the echoes thereof.

The ultrasound step-echo measurement data can be the result of an ultrasound echo received at the ultrasound inspection device that has been reflected and/or diffracted by both the relatively shallow portion and the relatively deep portion of the object. In particular, the ultrasound step-echo measurement data can be the result of an ultrasound echo received at the ultrasound inspection device that has firstly been reflected by a back-wall feature of one of the relatively shallow or deep portion of the object, then secondly reflected by the front surface, and then thirdly reflected by a back-wall feature of the other of the relatively shallow or deep portion.

The method can comprise identifying a peak in the step-echo measurement data. The method can comprise using the information about the peak to determine information about the step.

As mentioned above, the present invention has been found to be particularly useful for determining information about the location of the step. Accordingly, said information can comprise location information. In other words, the step of using said ultrasound step-echo measurement data to determine information about the step in the depth of the object, can comprise using said ultrasound step-echo measurement data to determine information about the position/location of the step in the depth of the object. For instance, the method of the present invention can be used to determine information about the lateral position/location of the step (e.g. with respect to the front surface of the object) (e.g. in a direction parallel to the front surface of the object). This in contrast to the depth/height position of the step measured in a dimension perpendicular to the front surface of the object. As will be understood, such depth/height position of the step can be inferred from known techniques for determining the depth of a back-wall feature - e.g. the depth of the edge of the step can be assumed to be the same as that of the back-wall feature immediately adjacent the edge of the step. Accordingly, whilst an ultrasound inspection device is traditionally used to determine information about the depth/height of a feature of an object, the present invention is using an ultrasound inspection device to determine information about the position of the step in the part in a dimension perpendicular to the traditional depth/height measurement.

The form/format of the information about the (lateral) position/location of the step can depend on the end user requirements. For instance, the information could comprise/identify which ultrasound echo measurement (or proper subset of ultrasound echo measurements) in the set of ultrasound echo measurement data is most indicative of being aligned with/positioned over the step in the depth of the object (e.g. which has the strongest ultrasound step-echo measurement data). For instance, if the set of ultrasound echo measurement data was obtained by ultrasound echo measurements (e.g. "pings") at a plurality of different points P along a line L (e.g. a predetermined inspection line) or within an area A (e.g. a predetermined inspection area), the method of the invention could return at which point along said line L or within said A (or set of points - being a proper subset of said set of ultrasound echo measurements) the step in the depth of the object is determined to be.

Said location information could comprise coordinate position information regarding the location of the step in the depth of the part. In other words, the information about the (lateral) position of the step could be in the form of coordinate position information (e.g. cartesian or non-cartesian), e.g. the X, or the X, Y position of the step in the depth of the object. If desired, information about the lateral position of the step could be combined with information determined about the height of the step in the depth of the object in order to determine the three-dimensional position of the edge of the step. (Accordingly, the method can additionally comprise determining information about the height of the step in the depth of the object, e.g. from the same set of ultrasound echo measurement data, and/or from a different set of ultrasound echo measurement data).

Advantageously, the method can comprise combining the information (e.g. the location information) about the step in the depth of the object, with other information known or assumed about the object. For instance, the method could comprise combining the information (e.g. the location information) about the step in the depth of the object, with other information determined via inspection of the object on the same or on another positioning apparatus (e.g. on the same or on another coordinate positioning apparatus). For instance, such "other information" could be determined via contact or non-contact dimensional measurement of the object (e.g. via a contact or non-contact dimensional measurement probe, such as touch-trigger or scanning probe, or the like). Accordingly, for instance, the method could comprise combining coordinate position information about the step in the depth of the object with coordinate position information about at least one other feature of the object (e.g. such that information about the position of the step in the depth of the object relative to one or more other features of the object can be determined/assessed).

The set of ultrasound echo measurement data could comprise ultrasound measurement data obtained at a set of points on the front surface of the object. The set of ultrasound echo measurement data/set of points could extend in one dimension only (e.g. along a straight line), or in two dimensions (e.g. so as to cover an area), relative to the front surface of the object. The method can comprise determining the location/position of the step in a dimension parallel to the extent along which the measurement data/set of points extend. Accordingly, the method can comprise determining the location/position of the step in a dimension parallel to shape of the front surface. As will be understood, if the front surface of the object is planar, then the method can comprise determining the location/position of the step in a dimension parallel to the plane of the front surface.

As will be understood, the ultrasound inspection device used to obtain the ultrasound echo measurement data can comprise a coupling element for engaging the surface of an object to be inspected. (As will be understood, this is not essential, and for instance in immersion systems a coupling element is typically not present). The coupling element could comprise a deformable coupling element. In other words, the coupling element can be a soft coupling element (as opposed to a rigid/hard coupling element). For example, the coupling element can comprise an elastomer. For example, the coupling element can comprise a polymer, for example a superabsorbent polymer. The coupling element can be wet, e.g. with lubricant. Any appropriate lubricant can be used. The coupling element could comprise a self-lubricating material. A self-lubricating material preferably releases a lubricant, such as water and/or oil, from its external surface in a controlled manner. The self-lubricating material may comprise an oleophilic elastomer. Advantageously, the self-lubricating material comprises a hydrophilic elastomer. For example, the hydrophilic elastomer may comprise an incompressible gelatinous hydrophilic elastomer material such as a lightly crosslinked hydrophilic vinyl elastomer or a super absorbent polymer hydrogel, for example Sodium polyacrylate.

In preferred embodiments of the invention, the set of ultrasound echo measurement data is/was obtained by an ultrasound inspection device mounted on a positioning apparatus, for example a coordinate positioning apparatus. The positioning apparatus may be a manually operated positioning apparatus, but preferably the positioning apparatus comprises one or more motors for automatic operation, e.g. under the control or one or more processing devices (e.g. a machine controller). In a preferred embodiment, the coordinate positioning apparatus comprises a coordinate positioning apparatus, examples of which include a coordinate measuring machine (CMM), a machine tool, a robot or an arm. The coordinate positioning apparatus may be a Cartesian (e.g. bridge type) positioning apparatus or a non-Cartesian (e.g. hexapod) positioning apparatus. The positioning apparatus could facilitate relative translational motion of the ultrasound inspection device and object in at least two linear degrees of freedom. The positioning apparatus could facilitate relative rotational motion of the ultrasound inspection device and object about at least one axis of rotation.

The ultrasound inspection device could be mounted on an articulated member which has at least one, and optionally two (preferably orthogonal) axes of rotation. The articulated member could be a continuously articulated member. Optionally, the articulated member comprises an indexed articulated member (e.g. the articulated member comprises a set number of discrete orientations at which the articulated member can be locked). The articulated member can comprise at least one motor for controlling the orientation of the ultrasound inspection device about the at least one axis.

The articulated member could be mounted on a member of the coordinate positioning apparatus which is moveable along said at least two linear degrees of freedom, and preferably is mounted on a member of the coordinate positioning apparatus which is moveable along three orthogonal degrees of freedom. In the case of a bridge-type CMM such a member is commonly referred to as the "quill" or "Z-column". Accordingly, the ultrasound inspection device could be mounted on what is commonly referred to in the field as a five-axis coordinate positioning apparatus. If desired, the object could additionally/alternatively be mounted so as itself to be linearly and/or rotatably moveable, e.g. it could be mounted on a rotary table.

The ultrasound inspection device can comprise a body portion distal the coupling element. In other words, the ultrasound inspection device can comprise a body portion at a first end, and the coupling element at the second end. The ultrasound inspection device can be mounted to the positioning apparatus via the body portion. The ultrasound inspection device (for example the body portion) and the positioning apparatus (for example, the articulated member/rotary head) can comprise corresponding mounting features for enabling the ultrasound inspection device to be mounted to the positioning apparatus, in particular which enable the ultrasound inspection device to be automatically loaded and unloaded on and off the positioning apparatus. In other words, preferably the ultrasound inspection device is auto-changeable on the positioning apparatus, e.g. to/from a rack located in the positioning apparatus' operating volume. The ultrasound inspection device (for example the body portion) and positioning apparatus can comprise complementary features of a repeatable mount, for example complementary features of a kinematic mount. At least one of the ultrasound inspection device and positioning apparatus can comprise at least one magnet for retaining the ultrasound inspection device on the positioning apparatus.

The ultrasound inspection device could itself include at least one processing device for analysing/processing the signal received by the ultrasound transducer, e.g. to determine time delay information. Alternatively, the signal received by the ultrasound transducer could be analysed/processed by an off-inspection device processing device (e.g. in an external interface or using an off-line computer).

As will be understood, references herein to "processing device"/ "processor" / "component for processing", and the like, are intended to include bespoke processing devices configured for the specific application (e.g. a field programmable gate array "FPGA") as well as a more generic processing devices which can be programmed (e.g. via software) in accordance with the needs of the application in which it is used. Accordingly, suitable processing devices include, for example, a CPU (Central Processor Unit), FPGA (Field Programmable Gate Array), or ASIC (Application Specific Integrated Circuit), or the like.

The ultrasound inspection device can comprise at least one transducer for emitting ultrasound energy/an ultrasound pulse. The ultrasound inspection device can comprise at least one transducer for sensing ultrasound energy/echoes of the emitted ultrasound energy/ pulse. Optionally, the ultrasound inspection device comprises the at least one transducer for emitting an ultrasound pulse and the at least one transducer for sensing an ultrasound pulse. Optionally, the at least one transducer for emitting the ultrasound pulse is the same sensor that is used to sense the ultrasound pulse. In other words, the ultrasound inspection device can comprise a single transducer for emitting and detecting the ultrasound pulse. The transducer may comprise a piezoelectric element. Preferably, the transducer excites longitudinal sounds waves (L-waves). The ultrasound inspection device can comprise a single-channel inspection device. For example, the ultrasound inspection device could comprise just one active element/transducer performing pulse echo operation. Optionally, the ultrasound inspection device could comprise a phased array inspection device.

The ultrasound inspection device may excite and receive ultrasound in any known way. The ultrasound inspection device may operate at a high frequency. For example, the operating frequency may be greater than 5MHz, greater than 10MHz or more preferably greater than 15MHZ. In an example embodiment, the operating frequency is around 20MHz. Higher frequencies (e.g. such as those above 15MHZ) have been found to be particularly useful for ultrasound inspection device with a deformable tip, and in particular have been found to provide higher resolution measurements. It has been found that at lower frequencies more noise can occur inside ultrasound inspection device having a deformable tip.

The method could further comprise using ultrasound echo measurement data obtained from the front surface to determine information concerning at least one of the thickness/depth of, material structure of (e.g. porosity or density of, crystal morphology and/or orientation of), or speed of sound within the relatively shallow and/or relatively deep portions of the object. Such ultrasound echo measurement data could be obtained by the same ultrasound inspection device that was used to obtain the set of ultrasound echo measurement used to determine information about the step in the depth of the object, or could be obtained by a different ultrasound inspection device. Optionally, at least some of the ultrasound echo data used to determine the information about the step in the depth of the object is also used to determine information concerning at least one of the thickness/depth of, material structure of (e.g. porosity or density of, crystal morphology and/or orientation of), or speed of sound within the relatively shallow and/or relatively deep portions of the object

According to a second aspect of the invention there is provided a method for inspecting an object having a step in its depth, between relatively shallow and deep portions, as measured by an ultrasound inspection device taking ultrasound echo measurements from a front surface of the object, the method comprising: identifying/using, from a set of ultrasound echo measurement data that extends across the step in the depth of the object, ultrasound step-echo measurement data having a time of arrival at the ultrasound inspection device approximately equal to that of: ToA(BW₁ₛ) + ToA(BW_{1d}), wherein ToA(BW₁ₛ) is the time of arrival at the ultrasound inspection device of a first-generation ultrasound echo created by said relatively shallow portion and ToA(BW_{1d}) is the time of arrival at the ultrasound inspection device of a first-generation ultrasound echo created by said relatively deep portion. As will be understood, features described above in connection with the first aspect of the invention are equally applicable to this aspect of the invention.

According to a third aspect of the invention there is provided computer program code comprising instructions configured such that when executed by a processor device cause the processor device to execute the any of the above-described method. According to a fourth aspect of the invention there is provided a computer readable medium, bearing computer program code as described above.

According to a fifth aspect of the invention there is provided an apparatus comprising at least one processor device configured to receive a set of ultrasound echo measurement data that extends across a step in the depth of the object, and configured to use, from therewithin, ultrasound step-echo measurement data which was created by the step in the depth of the object to determine information about the step in the depth of the object. As will be understood, features described above in connection with the above aspects of the invention are equally applicable to this aspect of the invention.

Embodiments of the invention will now be described, by way of example only, with reference to the following drawings in which:
Figures 1a to 1c schematically illustrates the fundamental operating principles of an example ultrasound inspection device;
Figure 2 illustrates an example signal received at an ultrasound inspection device taking an ultrasound echo measurement;
Figure 3 illustrates an ultrasound inspection device mounted on a coordinate measuring machine (CMM);
Figure 4 illustrates the different mechanical parts of an ultrasound inspection device;
Figures 5a to 5h schematically illustrates the echoes received by an ultrasound inspection device taking, at different inspection locations, ultrasound echo measurements of an object having a step in its thickness;
Figures 6a to 6d schematically illustrate different methods used to obtain ultrasound echo measurement data;
Figures 7a and 7b are charts illustrating ultrasound echo measurement data that extends across the step of the object of Figure 5;
Figure 8a illustrates another example of an object having a step in its depth;
Figures 8b and 8c are charts illustrating ultrasound echo measurement data that extends across the step of the object of Figure 8a;
Figure 9 shows a flow-chart of an example process for a method of finding the location of a step in the thickness of an object as measured by an ultrasound probe, in accordance with the present invention;
Figure 10 shows a flow-chart of an example process for identifying the ultrasound step-echo measurement data that was created by the step in the depth of the part;
Figure 11 schematically illustrates a step-echo created by diffraction of ultrasound energy by the step in the object;
Figures 12a, 12b, and 12c schematically illustrated how that a step in the depth of the object as measured by an ultrasound probe can be generated by different types of features of the object, and not just by a change in the thickness of the object between its front and back surfaces.

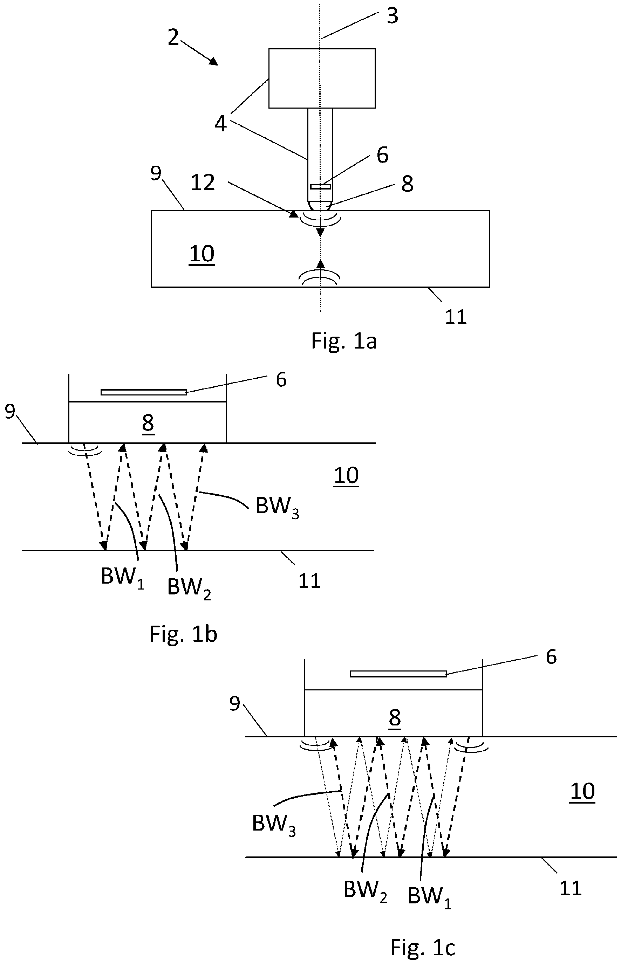

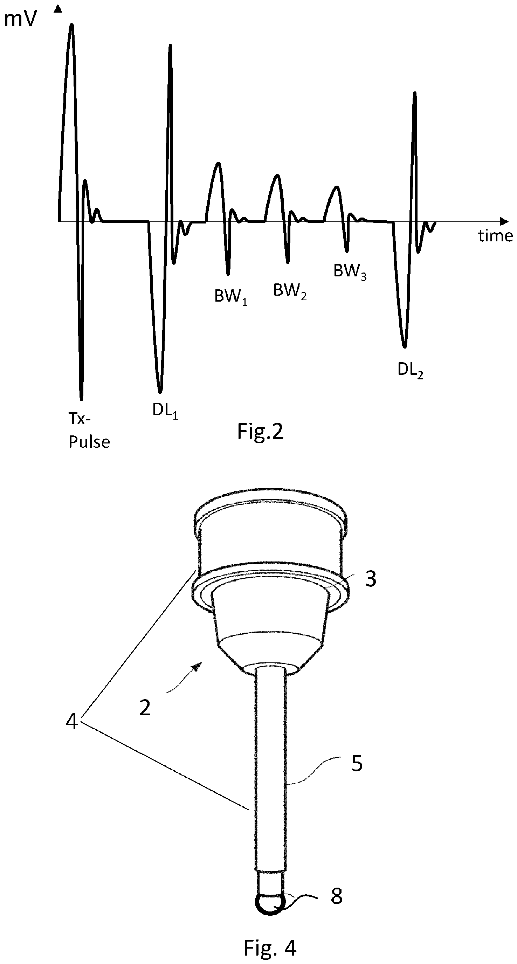

The fundamental operating principles of an example ultrasound inspection device will be explained with reference to Figures 1 and 2. Figure 1a shows an ultrasound inspection device 2 (herein referred to as an ultrasound probe) that comprises an outer body 4. An ultrasound wave/pulse transducer is provided that comprises a piezoelectric element 6 (or equivalent, such as a laser-ultrasound transducer), and a deformable coupling element 8. As will be understood, other commonly employed components within the ultrasound probe, such as the backing layer and matching layer (wave-plate), can form part of the ultrasound probe, but which for simplicity are not shown in Figure 1a. To measure the thickness of (or the depth of a feature inside) an object 10, the probe 2 and/or object 10 are moved so as to engage the deformable coupling element 8 and the front surface 9 of the object 10. When an excitation pulse is applied across the piezoelectric element 6, an ultrasound pulse 12 is projected into the object 10. As schematically illustrated, this ultrasound pulse 12 is reflected by the back surface 11 of the object (or any internal features between the front surface 9 and back surface 11), this reflected echo is sensed by the ultrasound probe (e.g. via the piezoelectric element 6) and is commonly referred to as a back-wall echo (regardless of whether it came from the back surface or an internal feature). This process can be referred to as pulse-echo measurement, or more colloquially as "pinging". As will be understood, a thickness/depth measurement estimation can be made using a time-of-flight or time-delay measurement of the projected ultrasound waveform.

Figure 2 is an example of the ultrasound signal/waveform received and output by the transducer's active piezoelectric element 6 in response to a transient high voltage excitation pulse being applied across the piezoelectric element 6. This time-domain waveform, referred to as an "A-scan" plot, can be a time averaged response from a train of such excitation pulses (e.g. a sequence of N pulses where N is at least 2, although a suitable range of values of N may be 16-32) in order to suppress random uncorrelated electronic noise.

The initial excitation pulse generated by the piezoelectric element 6 is labelled as the "Tx-Pulse" in Figure 2. This initial excitation pulse causes the inspection wave to propagate into the coupling element 8 (which acts as a delay line) and travel along at the speed of sound in the coupling element material (CL). The first reflection/echo peak (DL₁) received back at the piezoelectric element 6 arises from reflection of sound from the front surface 9 of the object 10. This reflection/echo from the front surface 9 of the object 10 (i.e. the DL₁ echo) can be seen to occur at a time well after the initial transmit pulse (Tx-pulse) has completely receded.

Although some ultrasound energy is reflected back from the front surface 9 and never enters the object 10, a sufficient proportion of ultrasound energy does transmit into the object 10 as a measurable inspection pulse from which subsequent thickness/depth measurements can be made. The speed of sound in the deformable coupling element 8 can be low compared to the speed of sound within the object 10, and so especially if the object is relatively thin (or the internal feature depth is relatively shallow), multiple reflections/echoes from the back surface 11 of the object 10 can occur before a second reflection/echo peak (DL2) from the delay line/coupling element 8 is registered at the transducer. For example, first, second and third generation back-wall echoes BW₁, BW₂, and BW₃ are illustrated in the "A-scan" plot of Figure 2, and these echoes are schematically illustrated in Figure 1b.

As schematically illustrated in Figure 1c, ultrasound energy is imparted into, and received from, the object 10 across the entire breadth of the coupling element 8, and therefore each point on the coupling element 8 could be considered as a discrete ultrasound emission and reception point. One such emission point and corresponding first, second and third generation back-wall echoes BW₁, BW₂, and BW₃ that are sensed by the ultrasound probe 8 are schematically illustrated in Figure 1b. Figure 1c illustrates the fact that there will actually be multiple instances of the situation illustrated in Figure 1b. For the sake of clarity, only two such emission points, and corresponding first, second and third generation back-wall echoes BW₁, BW₂, and BW₃ are illustrated in Figure 1c, but as will be understood, there will be similar emission points between the two illustrated emission points, and corresponding back-wall echoes thereof. As will also be understood, ultrasound energy will be emitted from an emission point not just in the direction illustrated by the arrows in Figures 1b, 1c, but will radiate outward from the emission point in multiple directions over a hemisphere.

Figures 1b and 1c illustrate the presence of first, second and third generation back-wall echoes, but as will be understood, the number of back-wall echoes received will depend on various factors including the depth of the section of the object being measured.

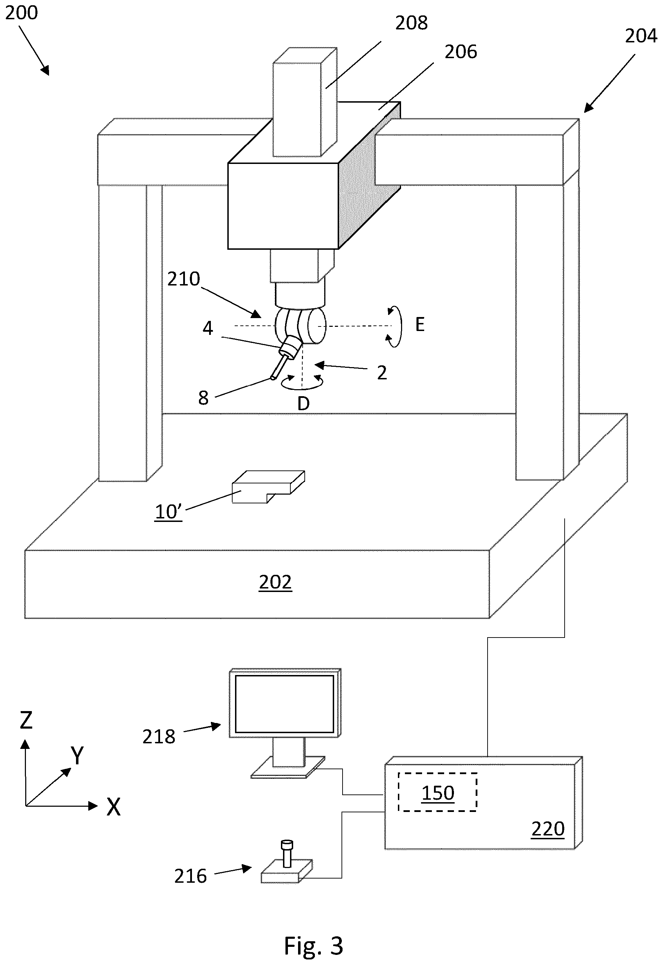

With reference to Figure 3 there is shown the ultrasound probe 2, mounted on a positioning apparatus 200. The positioning apparatus comprises a movement structure, in this case in the form of a coordinate measuring machine ("CMM"). The CMM 200 comprises a base 202, supporting a frame 204 which in turn holds a carriage 206 which in turn holds a quill 208 (or "Z-column"). Motors (not shown) are provided to move the quill 208 along the three mutually orthogonal axes X, Y and Z (e.g. by moving the frame 204 along the Y axis, and the carriage 206 along the X axis, and the quill 208 along the Z-axis).

In the embodiment described, the ultrasound probe 2 is mounted to the positioning apparatus 200 (e.g. to the quill 208) via an articulated head 210 which facilitates rotation of the ultrasound probe 2 about two axes of rotation D, E. However, as will be understood, this need not necessarily be the case and the ultrasound probe 2 could be mounted to the positioning apparatus 200 via a fixed, non-rotatable head. The articulated head 210, which could be an indexing head or a continuous head (e.g. a REVO^{®} head available from Renishaw plc). As will be understood, a continuous head enables orientation of a device mounted on it at substantially any angle about at least one axis and are often described as providing a near infinite number of angular orientations. Also, if desired, the orientation of the measurement device about an axis of a continuous head can be changed during measurement (e.g. whilst a contact probe is in contact with an object being inspected and acquiring measurement information). In contrast, an indexing head has a discrete number of defined ("indexed") positions at which the measurement device mounted on it can be locked. With an indexing head, the orientation of the measurement device can be changed, but not during the acquisition of measurement data.

In this embodiment, the articulated head 210 facilitates rotation of the probe 2 mounted on it, about first and second rotational axes D, E via appropriate bearings and motors (not shown).

The combination of the two rotational axes (D, E) provided by the articulated head 210 and the three linear (X, Y, Z) axes of translation of the CMM 200 allows the ultrasound probe 2 to be moved/positioned in five degrees of freedom (two rotational degrees of freedom, and three linear degrees of freedom).

Further, although not shown, measurement encoders may be provided for measuring the relative positions of the base 202, frame 204, carriage 206, quill 208 and the parts of the articulated head 210 so that the position of the measurement probe 2 relative to a workpiece 10' located on the base 202 can be determined.

A controller 220 is provided for controlling the operation of the CMM 200, such as controlling the position and orientation of the ultrasound probe within the CMM volume (either manually, e.g. via an input device such as joystick 216, or automatically, e.g. under the control of an inspection program) and for receiving information (e.g. measurement information) from the CMM 200. A display device 218 can be provided for aiding user interaction with the controller 220. The controller 220 could, for example, be a dedicated electronic control system and/or may comprise a personal computer.

As shown, a probe interface 150 (for facilitating communication with the ultrasound probe 2) can be provided in the controller 320, for example.

The example ultrasound probe 2 will now be described in more detail in connection with Figure 4. The ultrasound probe 2 comprises a base module that includes a main body portion 3, which is provided at the proximal end of the probe 2 that attaches to the positioning apparatus/CMM. The main body 3 can contain electronics required to power the probe and communicate control data and activation commands to the probe (e.g. to schedule ultrasonic measurements). Power and/or control data, including ultrasonic data and thickness measurement results, may be passed through the rotary head communication channels and/or wirelessly. Rather than power being provided via the CMM, power could be provided by a battery located in the main body portion 3, for example.

An elongate tube 5 (e.g. a rigid carbon-fibre tube) extends from the main body 3, along the probe's axial length. The coupling element 8, is located at the end of the tube 5 distal the main body 3. In the embodiment described, the coupling element 8 is a deformable coupling element (which can be useful if the ultrasound probe is to engage the surface of the object to be inspected at different angles), but this does not need to be the case and the coupling element could be rigid. In the embodiment described, the coupling element 8 comprises a hydrophilic elastomer. Optionally, the coupling element 8 is replaceable (e.g. could be attached via a screw or snap-fit). Optionally, and as is the case in the embodiment described, at least the portion of the coupling element 8 which protrudes from the tube 5 is spherical. As will be understood, the coupling element may engage a wear plate of the transducer in the probe, and the coupling element 5 may act as both the coupling element and a delay line. The coupling element 5 can be soft and elastic so as to easily conform to the surface of the object 10' it engages.

In use, the ultrasound probe 2 is moved by the CMM 200 so as to bring the coupling element 8 into contact with the front surface 9 of the object 10' to be inspected, thereby forming an acoustic coupling with the object. The ultrasound probe 2 generates an ultrasound pulse/wave (for example, via a piezo-electric element or the like, such as a laser-ultrasound transducer) which is imparted into the object 10', and reflected by an internal feature or the back surface 11 of the object 10', thereby creating a "back-wall echo". The back-wall echo is sensed and recorded by the ultrasound probe 2/controller 220.

The ultrasound inspection apparatus may excite and receive ultrasound in any known way. The ultrasound inspection apparatus may operate at a high frequency. For example, the operating frequency may be greater than 5MHz, greater than 10MHz or more preferably greater than 15MHZ. In a preferred embodiment, the operating frequency is around 20MHz. The transducer, which may comprise a piezoelectric element, preferably excites longitudinal sounds waves (L-waves).

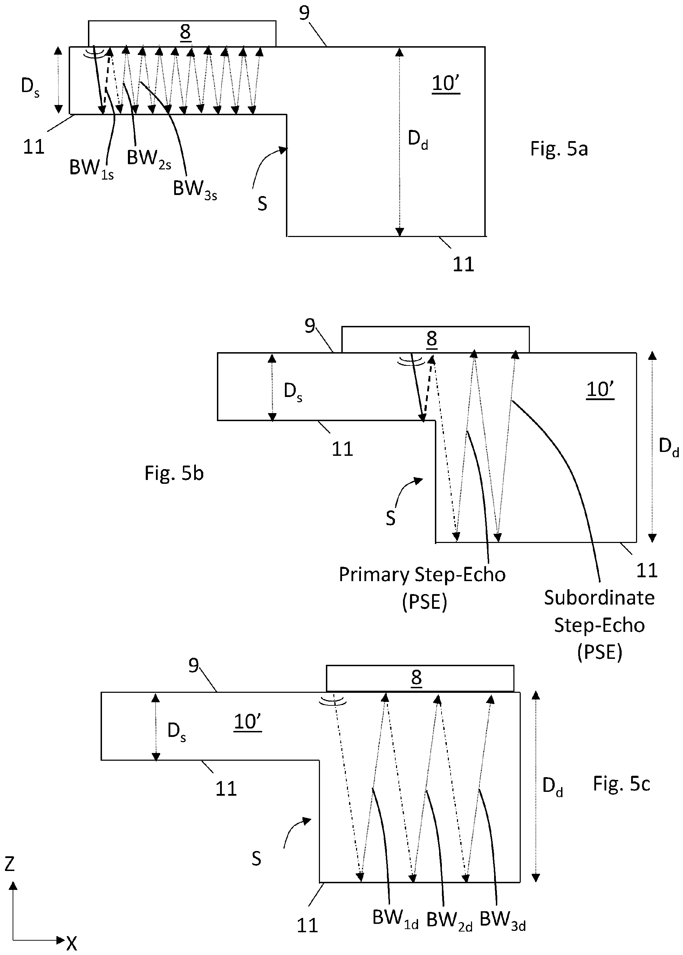

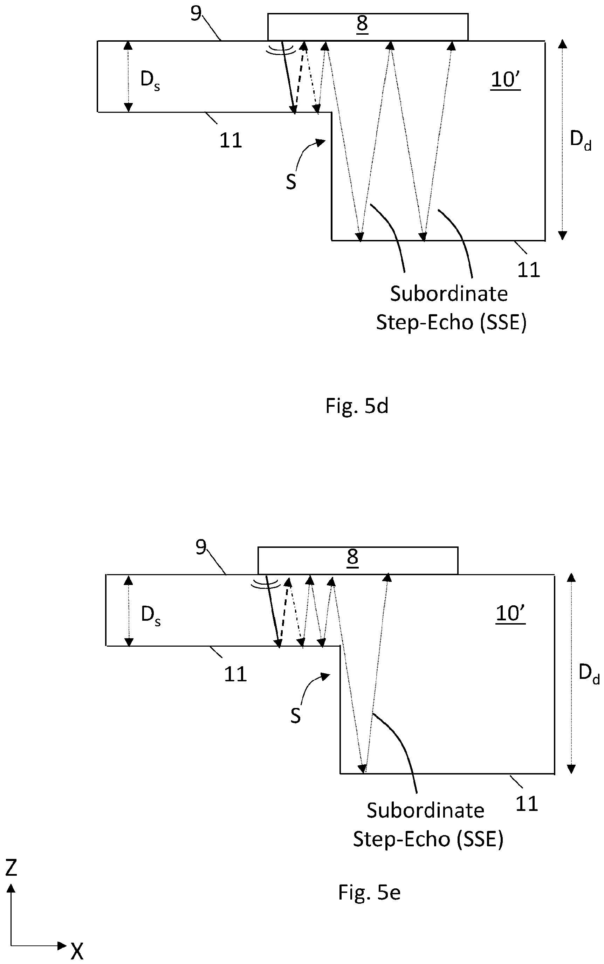

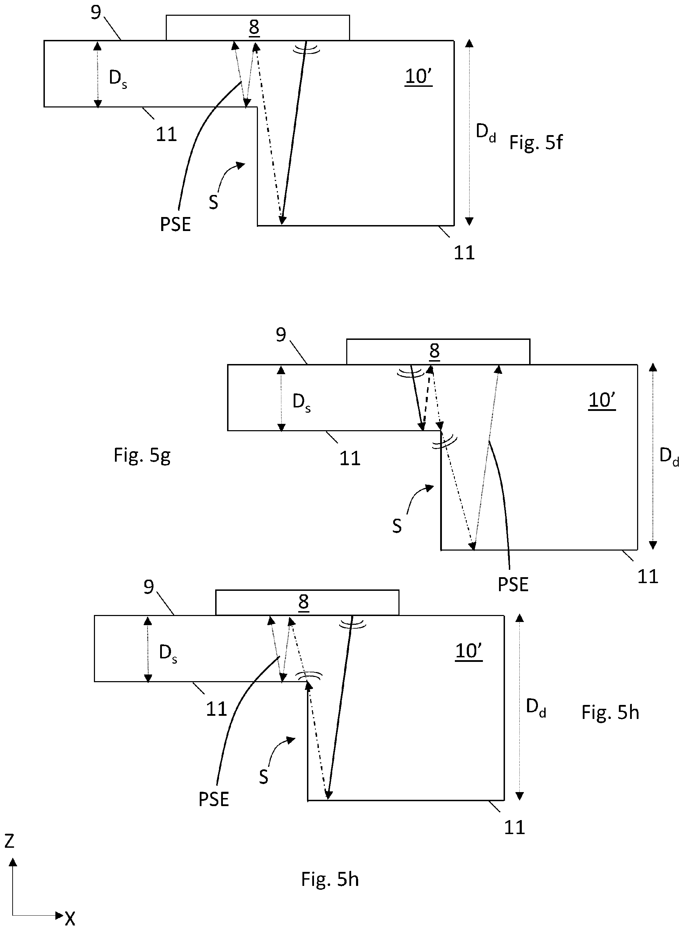

Figure 5 shows a cross-sectional view through an object 10' having a step S in its thickness between a relatively thick/deep section of the object 10' having a depth D_{d} and a relatively thin/shallow section of the object 10' having a depth Dₛ. Figure 5a schematically illustrates an ultrasound echo measurement being taken at the relatively shallow section of the object 10'. Figure 5c schematically illustrates an ultrasound echo measurement being taken at the relatively deep section of the object 10'. Figure 5b schematically illustrates an ultrasound echo measurement being taken within the vicinity of the step S in the depth of the object 10'. For the sake of simplicity, only the coupling element 8 of the ultrasound probe 2 is shown in Figure 5.

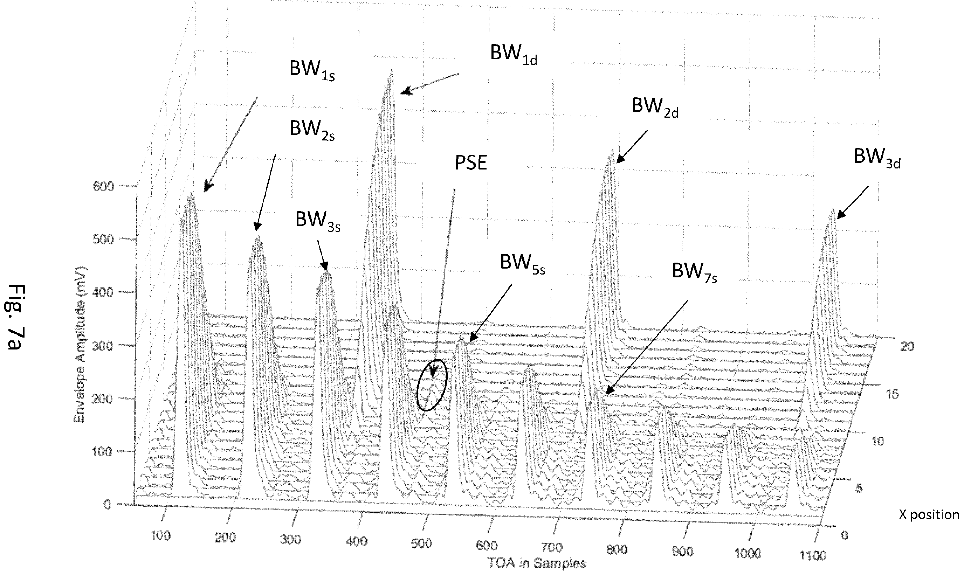

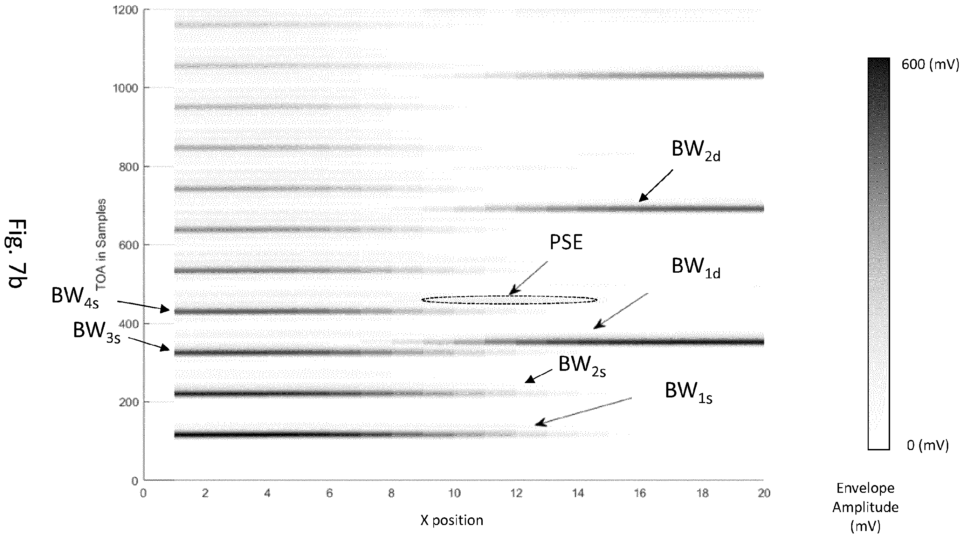

As shown by Figures 5a and 5c, when the ultrasound probe 2 is positioned away from the step S, the ultrasound echoes are formed only by the shallow section or only by the deep section of the object 10'. Accordingly, the data for ultrasound echo measurements taken at those positions will be typical of that normally associated with an ultrasound echo measurement; e.g. as described above in connection with Figure 2 will comprise data indicative of one or more regularly spaced back-wall echoes BW# being detected at the ultrasound probe between the delay-line echoes DL#. For instance, as illustrated in Figure 5a, an ultrasound probe taking an ultrasound echo measurement at the shallow section will sense and therefore collect data representing a number of (in this embodiment, ten) generations of back-wall echoes (the first-(BW₁ₛ), second-(BW₂ₛ) and third-(BW₃ₛ) generation echoes are explicitly labelled in Figure 5a). Similarly, as illustrated in Figure 5c, an ultrasound probe taking an ultrasound echo measurement at the deep section will sense and therefore collect data representing a first-generation back-wall echo BW_{1d}, a second-generation back-wall echo BW_{2d}, and a third-generation back-wall echo BW_{3d}. As will be understood, due to the further distance travelled by the ultrasound energy in the deep section compared to the shallow section, the time of arrival (ToA) of the echoes in the deep section will be greater than that of the echoes in the shallow section. This can be visualised in Figures 7a and 7b which shows a plot of the magnitude/strength of the echo signal received at a given time of arrival (after generation of the ultrasound pulse), for a number of different positions along the x-axis at which the ultrasound measurement was taken. As will be understood, the Envelope Amplitude can be determined using signal processing techniques such as the Hilbert Transform, for example.

As illustrated in Figure 5b, when the ultrasound probe is positioned in the vicinity of the step S, a "Step-Echo" is formed, which is an echo created by the step S in the depth of the object 10'. In this particular example, in the position shown, there are two step-echoes which created and sensed by the ultrasound probe; a "Primary Step-Echo" (PSE) and a "Subordinate Step-Echo (SSE).

The Primary Step-Echo (PSE) is primarily a result of ultrasound energy emitted by the ultrasound probe that is reflected by the back-wall of the object on a first side of the step once (in this instance the shallow section), reflected by the front-surface of the object once, and then reflected by the back-wall of the object on the other side of the step once (in this instance the deep section). Accordingly, the time of arrival (ToA) of the Primary Step-Echo will be different to that of any of the echoes created solely by the shallow section or the deep section, and in particular will be approximately equal to the ToA of a back-wall echo in the shallow section plus the ToA of a back-wall echo in the deep section. In other words, the ToA(PSE) ≈ ToA(BW₁ₛ) + ToA(BW_{1d}).

As will be understood, the Primary Step-Echo having the above-described ToA(PSE) will also be a result of reflections and diffractions of ultrasound energy other than that illustrated in Figure 5b. For instance, Figure 5f illustrates that at the same position and time as the situation shown in Figure 5b, the Primary-Step Echo sensed by the ultrasound probe will also be a result of ultrasound energy being reflected initially by the back-wall 11 of the object's deep section, then reflected by the front surface 9, and then reflected by the back-wall 11 of the object's thin section (and will therefore have a ToA ≈ ToA(BW₁ₛ) + ToA(BW_{1d})). Furthermore, although the Primary Step-Echo is primarily made up of the above-described pure reflections, the Primary Step-Echo (having the above-described ToA(PSE)) can also be a result of ultrasound energy being diffracted. For instance, Figures 5g and 5h schematically illustrate the diffraction of ultrasound energy by the edge of the step S. As will be understood, the ToA of such echoes which have experienced such diffraction will also be ≈ ToA(BW₁ₛ) + ToA(BW_{1d}).

It has been found that as a result of these different paths, the amplitude of the PSE is strongest when the ultrasound probe is positioned in line with the step in the depth of the part. Accordingly, finding the location of the peak value of the PSE can be a reliable indication of the location of the step.

As illustrated by Figures 5b, 5d and 5e, older-generation/Subordinate Step-Echoes are created due to multiple internal reflections within the shallow or deep sections of the object. The Subordinate Step-Echo(es) has (have) a time of arrival approximately equal to: N₁.ToA(BW₁ₛ) + N₂.ToA(BW_{1d}), wherein at least one of N₁ and N₂ is greater than one. The amplitude of any such Subordinate Step-Echoes is substantially less than that of the Primary Step-Echo and therefore a determination of the location of the step based on a Subordinate Step-Echo will be more adversely affected by noise compared to a determination of the location of the step based on the Primary Step-Echo. Also, Subordinate Step-Echoes may not return a maximum amplitude when the probe is directly over the step in the depth of the part. (As shown in Figure 5b, the path taken by the Subordinate Step-Echo results in a larger x distance between the source point and receiving point. When the probe is directly over the step, relatively few points of transducer can receive Subordinate Step-Echoes). Accordingly, in the current embodiment, only the Primary Step-Echo is used to determine the location of the step (but as will be understood, the Subordinate Step-Echo data could be used if desired).

As illustrated in Figures 7a and 7b, amplitude of Primary Step-Echo (labelled PSE) is significantly less than that of the standard/expected back-wall echoes. The PSE data is highlighted by a dashed-line in Figure 7b in order to aid visualisation of the PSE in the graph (because due to the weakness of the signal strength/amplitude of the PSE data, the PSE data is difficult to see).

It is possible to try to infer the location of the step from the standard back-wall echoes generated solely by the deep section (e.g. BW_{1d}, BW_{2d}) and/or the standard back-wall echoes generated solely by the shallow section (e.g. BW₁ₛ, BW₂ₛ). For instance, as illustrated in Figure 7a and 7b, the data indicates that the BW₁ₛ and BW_{1d} signals overlap along the x-axis, and the magnitudes of the BW₁ₛ andBWia signals assess the location at which magnitudes of BW₁, and BW_{1d} are substantially identical (accounting for signal losses due to the relative thicknesses of the sections) and an assumption can be made that that position is the location of the step.

However, the inventor found that despite it significantly lower amplitude, the Step-Echo measurement data (and in particular the Primary Step-Echo measurement data) can provide a much more accurate and reliable measurement of the location of the step, especially for more a complex part where the standard back-wall echoes generated solely by the shallow or deep section are less consistent on the approach to the step. In particular, the inventors found that taking the position at which the Primary Step-Echo measurement data has its highest magnitude (i.e. the location of the peak signal having a time of arrival approximately equal to ToA(BW₁ₛ) + ToA(BW_{1d})) provides an accurate and reliable indication of the step in depth of the object.

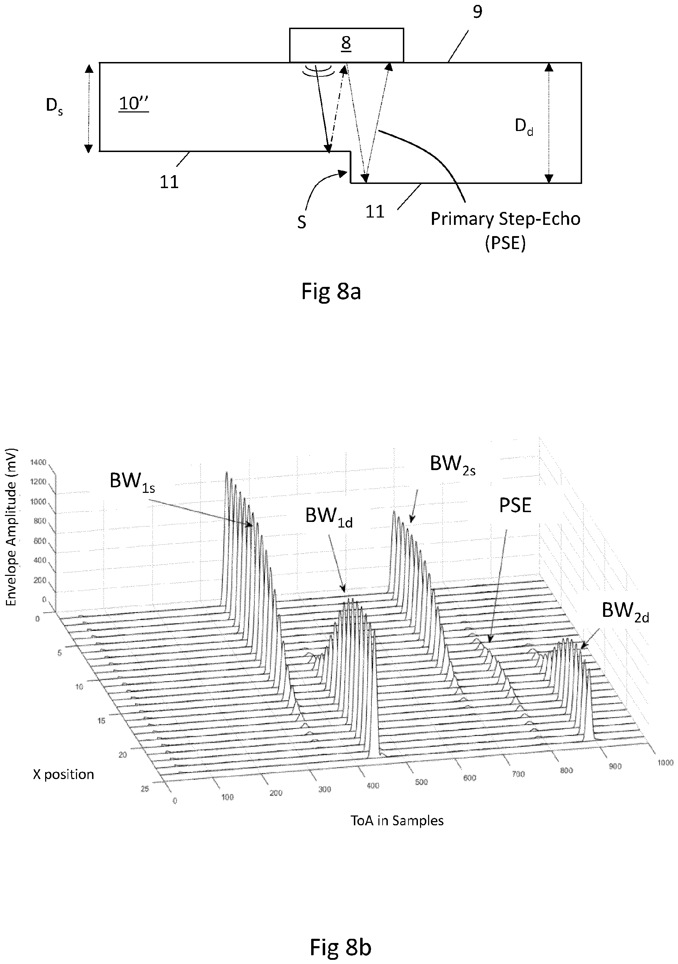

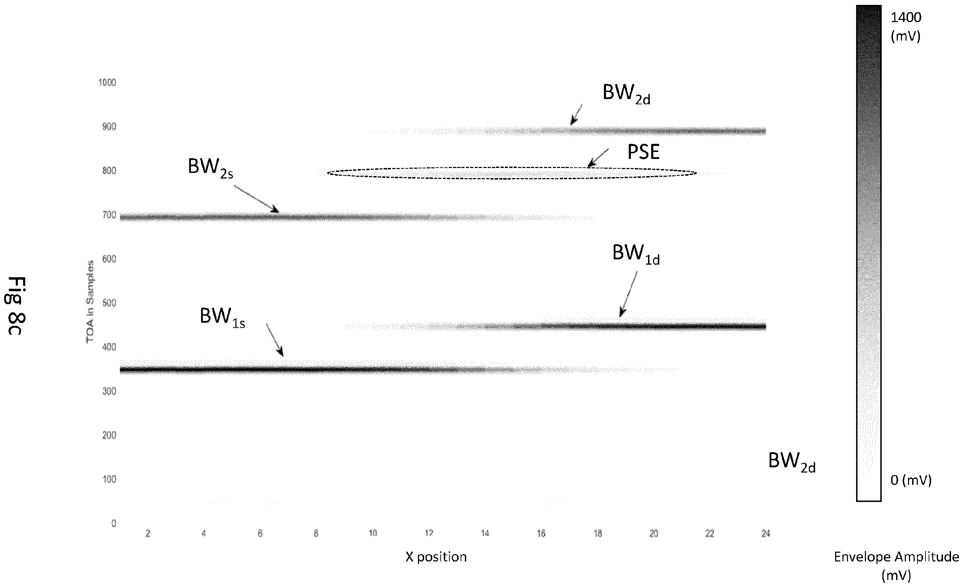

As mentioned above, the PSE data for the object 10' shown in Figure 5 is difficult to see/distinguish in Figures 7a and 7b. Accordingly, Figures 8a, 8b and 8c serve to illustrate a simpler embodiment, where due to the configuration of the shallow and deep sections of the object 10", the PSE data in the graphs 8b and 8c is more separate and distinct from the back-wall echo data generated solely by the relatively shallow section or solely by the relatively deep section.

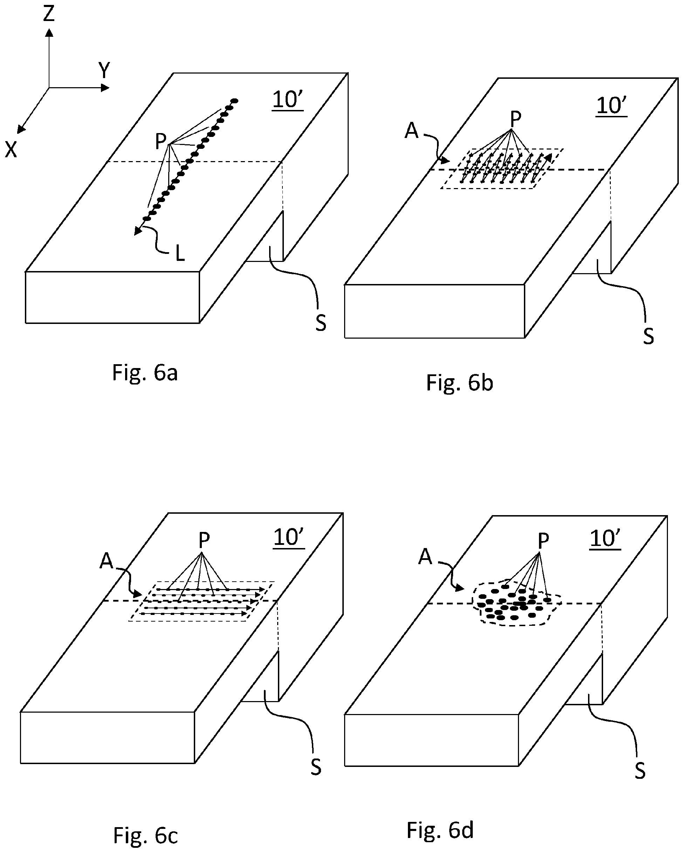

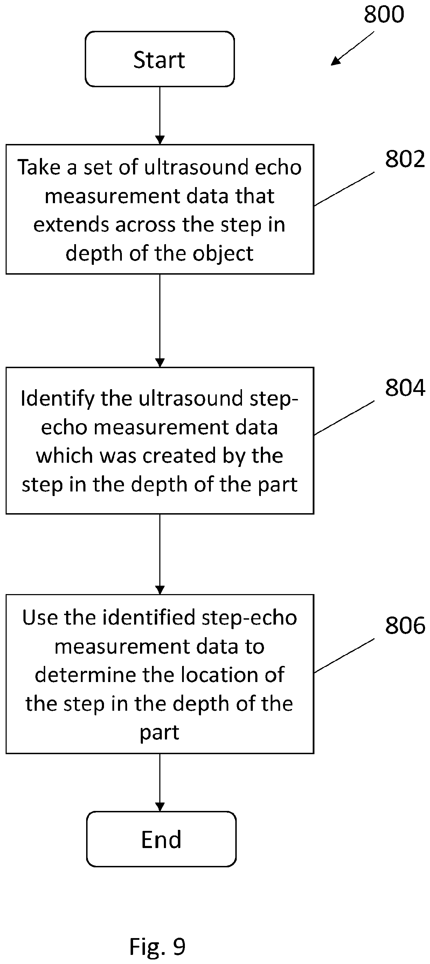

An example method for finding the step on the basis of the step-echo measurement data will now be described with reference to Figure 9 which shows an example flow-chart 800 for a method according to the present invention. The method begins in step 802 which comprises taking a set of ultrasound echo measurement data that extends across the step in the depth of the object. Step 802 could comprise the action of measuring an object to obtain the data. However, as will be understood, this need not necessarily be the case and for instance step 802 could comprise receiving/retrieving such data (e.g. from a remote device and/or from a memory device which prior obtained the data). As shown in Figure 6a, the set of ultrasound echo measurement data could comprise data obtained by taking ultrasound measurements (e.g. "pings") at a number of points P along a straight-line L which extends across the step S in the depth of the object. These measurements could be obtained with the ultrasound probe 2 stationary at each of these points or could be obtained whilst the ultrasound probe 2 is continuously moving. The measurement data could comprise data obtained using different methods/paths. For instance, as illustrated in Figure 6b, the measurement data could comprise data obtained by taking ultrasound measurements at a number of points P along a path which sweeps back-and-forth across the step S a plurality of times, within an area A that extends across the step S. As illustrated in Figure 6c, the measurement data could comprise data obtained by taking ultrasound measurements at a number of points P along number of laterally offset paths that extend parallel to the step in the depth of the object, thereby covering an area A that extends across the step in the depth of the object. As illustrated in Figure 6d, the measurement data could comprise data obtained by taking ultrasound measurements at a number of points P at irregular (e.g. random) positions within an area A extending across the step in the depth of the object.

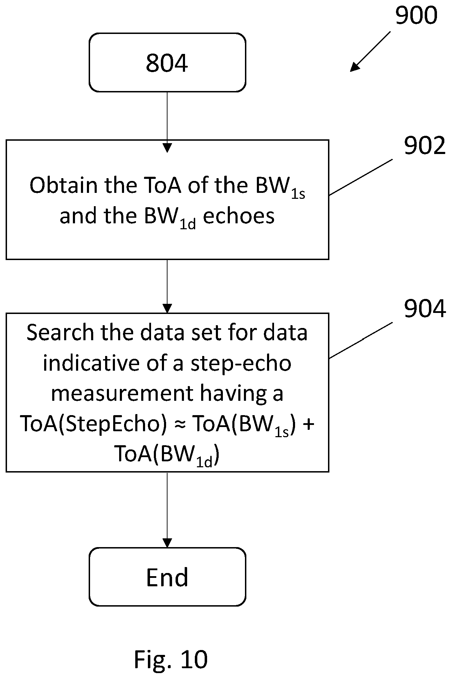

The next step 804 in the process 800 comprises identifying which data in the set was created by the step in the depth of the part (herein referred to as ultrasound "Step-Echo" measurement data, or just "Step-Echo" measurement data). An example process 900 for this step is shown in Figure 10. The first step 902 in the process is to obtain the time of arrival (ToA) of the first generation back-wall echo in the deep section (BW_{1d}) of the object 10' and also the ToA of the first generation back-wall echo in the shallow section (BW₁ₛ) of the object. This could either be already known (e.g. from a previous ultrasound echo measurement), assumed (e.g. from knowledge of the actual or nominal depths of the deep and shallow sections of the part) or could be calculated from the current ultrasound measurement data set, e.g. by measuring the ToA of the peak of the first-generation back-wall echo received. As will be understood, if the interface feature/back surface of the object that creates the back-wall echo is not flat and/or parallel to the front surface 9, then it can be advantageous to measure the ToA of the peak of the first-generation back-wall echo received close to (e.g. at the point) the amplitude of the first-generation back-wall echo begins to diminish (in a direction toward the step).

The next step 904 in the process comprises searching within the set of ultrasound echo measurement data, for echo signal data having a ToA approximately equal to the ToA of the first generation back-wall echo in the deep section (BW_{1d}) plus the ToA of the first generation back-wall echo in the shallow section (BW₁ₛ). Signal data received at such a ToA (i.e. a ToA ≈ ToA(BW₁ₛ) + ToA(BW_{1d})) is assumed to be created by the step and therefore is assumed to be Primary Step-Echo measurement data.

The method then returns to step 806 (Figure 9) in which the Primary Step-Echo measurement data identified in step 804 is used to determine the location of the step in the depth of the part. In this embodiment, the position of the Primary Step-Echo measurement data (that was identified in step 804) that has the highest/peak value is used as the position of the step. For the embodiment of Figure 6a, the determined location of the step in the depth of the part could be the position along the line L (e.g. X position data) at which the highest/peak Primary Step-Echo measurement was obtained. If desired (and/or for those embodiments in which the ultrasound probe is not mounted on a coordinate positioning apparatus), information identifying the ultrasound measurement (e.g. "ping") that obtained the highest/peak value could be output as the information about the location of the step S. For example, with reference to Figures 6a, each point P of measurement ("ping") could be uniquely identified/tagged (e.g. numbered 1 to #) and the information about the location of the step S could merely comprise the unique identifier (e.g. number) of the point P that was identified in step 806.

However, in view that the ultrasound inspection device 2 is mounted on a CMM 200, the coordinates of the ultrasound measurement (e.g. "ping") that obtained the highest/peak value could be used to determine/return coordinate position information about the location of the depth in the step of the object. This could be coordinate information about its lateral position (e.g. its position parallel to the front surface). However, such information about its lateral position could be combined with (assumed or known) information about the height/depth of the relatively shallow and/or deep portions (e.g. relative to the front surface) in order to obtain 3 dimensional position information about the position of the step in the depth. Such information about the height/depth of the relatively shallow and/or deep portions could be determined from the ultrasound echo measurements ("pings") obtained by the same ultrasound probe as that used to obtain the ultrasound step-echo measurements. Indeed, such information about the height/depth of the relatively shallow and/or deep portions could be determined from the same set of ultrasound echo measurements data within which the ultrasound step-echo measurements data is contained (e.g. from the ultrasound echo measurement data obtained at positions away from the step, such as that illustrated by Figures 5a and 5c).

As described in more detail below, the location information about the step in the depth of the part can be combined with other (e.g. location/position/measurement) information about the object.

As will be understood, the method as described above in connection with the embodiment of Figure 6a could be repeated for multiple offset measurement lines L that extend parallel to that shown in Figure 6a, thereby enabling information about the location of the step S in both the X and Y dimensions to be obtained.

As will be understood, for the embodiments of Figures 6b to 6d, step 806 could comprise finding a plurality of points indicative of the presence of the step in the depth of the object; e.g. for each of a plurality of different Y positions, find the X position/point (P) number having the highest/peak value. Accordingly, information about the location of the step S in both the X and Y dimensions can be obtained from the set of ultrasound measurement data obtained using the schemes of Figures 6b, 6c and 6d. Again, such information about the position of the step could, for example, comprise coordinate position data and/or could, for example, comprise the unique identifiers of the points P.

The information determined in step 806 could be stored and/or used in isolation. However, advantageously, the information determined in step 806 about the location of the step in the depth of the part can be combined/used with other information (known/measured or nominal/assumed) about the object. For instance, "other position/measurement data about the object" could be used in combination with the information determined in step 806 in order to assess/determine the location of the of the step in the depth of the part relative to other features of the object. Accordingly, the method can comprise retrieving (e.g. obtaining) location/position information about features of the object other than the step and combining such location/position information with the location/position information about the step in the depth of the part. Such "other position/measurement data about the object" could be obtained by the CMM 200 collecting measurement information about the object. Such "other position/measurement data about the object" could be obtained via the ultrasound inspection device 2 and/or via one or more other probes (e.g. contact or non-contact position measurement probes) which can be interchanged with the ultrasound inspection device 2 on the CMM's quill 208/articulated head 210. Obtaining the information about the step in the depth of the part and such "other position/measurement data about the object" on the same CMM can be particularly advantageous because it helps to minimise registration errors and machine-specific errors from having an adverse effect on the combining of the information/data.

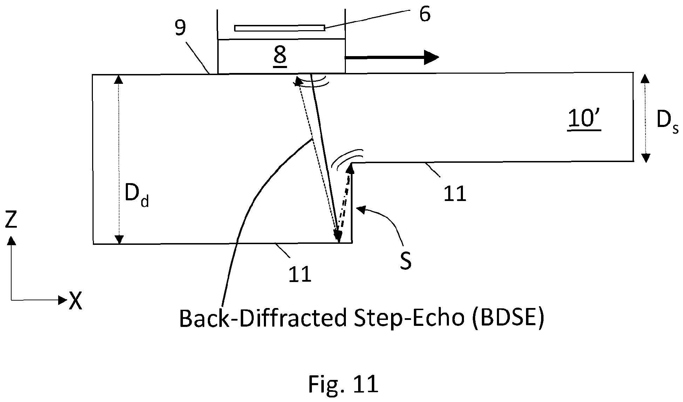

With reference to Figure 11 the inventor identified that in addition to Step-Echo measurement data being created by the step due to reflection (and optionally diffraction) of the ultrasound energy in the manner described above in connection with Figure 5 (which resulted in the Step-Echo data PSE labelled in Figures 7 and 8), Step-Echo measurement data can also be created due to the edge of the step diffracting ultrasound echo measurement back toward the back surface 11 of the deep section of the object 10' which in turn reflects such ultrasound energy back toward the ultrasound probe 2 (e.g. as schematically illustrated in Figure 11). Such reflections can result in group of "Back-diffracted" Step-Echo data (BDSE) that is separate from the above-described Primary Step-Echo (PSE) data. The BDSE data could be identified (e.g. at step 804) by searching within the set of ultrasound echo measurement data, for echo signal data having a ToA approximately equal to: 4(ToA(BW_{1d}))- 2(ToA(BW₁ₛ)). The BDSE data can be used instead of, or as well as the PSE data to determine the location of the step. For instance, the position of the step can be determined by taking an average of the positions of the peak PSE and BDSE values.

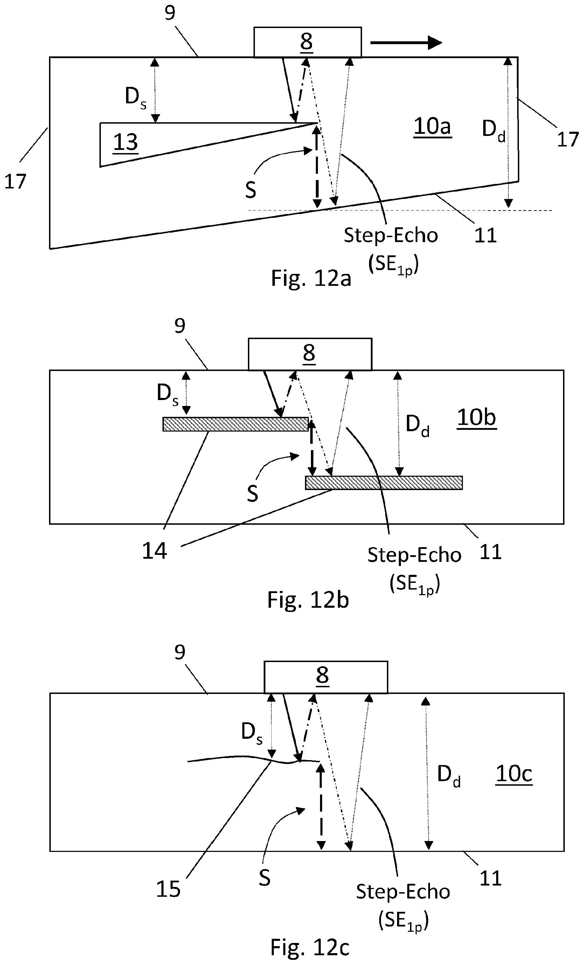

In the embodiment described above, the object 10' is solid, defect free and the step S in the depth of the object is caused by a step in the thickness of the object 10'. However, the method of the invention can be useful for locating a step in the depth of the object (as measured by the ultrasound probe taking ultrasound echo measurements from the front surface 9 of the object) caused by other factors/features. For instance, Figure 12a illustrates a hollow object 10a where there is a step S in the depth of the object (as measured by the ultrasound probe) due to the boundaries of the hollow section 13. Accordingly, the above-described method of the invention can be used to identify the edge(s) of the hollow section. As also illustrated by Figure 12a, the back surface 11 of the object 10a need not necessarily be parallel to the front surface 9. This can also be true for the surface of the hollow portion of the object which creates the shallow section back-wall echoes.

Figure 12b illustrates an object 10b having a constant thickness, but comprises internal features 14 made of a material different to that of the rest of the object 10a. The ultrasound energy emitted by the ultrasound probe will be at least partly reflected at the interface between the different material types, and so the depth of the object as measured by the ultrasound probe taking ultrasound echo measurements from the front surface 9 of the object will be affected by the internal features 14. Accordingly, the above-described method of the invention can be used to identify the location of the edge(s) of said internal feature(s) 14.

Figure 12c illustrates an object having a constant thickness, but has an internal fault 15, such as a crack. At least some of the ultrasound energy emitted by the ultrasound probe 2 will be reflected by the fault 15, creating a back-wall echo which will be sensed by the ultrasound probe. Accordingly, the depth of the object as measured by the ultrasound probe taking ultrasound echo measurements from the front surface 9 of the object will be affected by the fault 15.

Accordingly, the above-described method of the invention can be used to identify the location of the edge(s) of said fault 15.

As mentioned above, information about the step in the depth of the object (e.g. its location) could be combined with other information about the object. For instance, with reference to the embodiment of Figure 12a, it might be important for the end-user to know the position of the edge(s) of the hollow section 13 relative to the end walls of the object. Accordingly, the data concerning the position of the step in the depth obtained using the method of the invention can be combined with known or assumed data concerning the position of the end walls. For instance, such data could be assumed from a nominal (e.g. computer-aided design - CAD) model of the object, or could be known from measurement of the object, e.g. via a different probe, such as a contact probe.

In the embodiments described above, the step in the depth of the object comprises a substantially linear step (in a dimension perpendicular to the depth measurement, e.g. along the Y dimension in the drawings). However, this need not necessarily be the case, and it could be curved step or irregularly shaped step. Also, in the embodiments described above, the step in the depth of the object has a well-defined sharp edge. However, this need not necessarily be the case and the edge or corner of the step could be curved, for instance.

The present invention is suitable for use with a range of different types of ultrasound inspection device, including immersion-type ultrasound inspection systems. WO2016/051147, WO2016/051148, and US7891248 describe various types of example ultrasound probe which the invention can be used with.

As will be understood, the present invention can be used with other types of positioning device, such as a robot arm, machine tool apparatus, and can even be used with manually held ultrasound inspection device.

In the embodiments described above, the ultrasound measurements ("pings") are obtained with the ultrasound probe oriented such that its ultrasound axis is arranged normal to the front surface of the object. However, this need not necessarily be the case.

In the embodiment described, the ultrasound probe used to inspect the object is mounted on an apparatus which enables the ultrasound probe and object to be inspected to be rotated/reoriented relative to each other about at least one axis of rotation. However, this need not necessarily be the case and for instance the ultrasound probe could be mounted on an apparatus which only facilitates relative translation of the ultrasound probe and object without any relative rotation thereof.

In the embodiments described above, the location of the step in the depth of the part is determined. However, this need not necessarily be the case and the method of the invention can also be used to determine other information_about the step. For example, the step-echo measurement data can be used to determine the sum of the relatively shallow and deep section thicknesses. As another example, the step-echo measurement data could be used to determine information about the geometry of the step, e.g. from the relative amplitudes of the Primary Step-Echo (explained below), the first-generation back-wall echo of the relatively shallow section and the first-generation back-wall echo of the relatively deep section of the echo. Furthermore, for example, the step-echo measurement data for the object could be compared to nominal step-echo measurement data (or step-echo measurement data of a reference object) in order to compare the step to that of the nominal (or reference) data/object (e.g. to find parts which do not conform to the nominal (or reference) data/object).

## Claims

1. A method for determining information about a step in the depth of an object, between relatively shallow and deep portions of the object, as measured by an ultrasound inspection device taking ultrasound echo measurements from a front surface of the object, the method comprising:
taking a set of ultrasound echo measurement data that extends across the step in the depth of the object and using, from therewithin, ultrasound step-echo measurement data which was created by the step in the depth of the object to determine information about the step in the depth of the object.

2. A method as claimed in claim 1, in which ultrasound step-echo measurement data has a time of arrival at the ultrasound inspection device approximately equal to that of: ToA(BW₁ₛ) + ToA(BW_{1d}), wherein ToA(BW₁ₛ) is the time of arrival at the ultrasound inspection device of a first-generation ultrasound echo created by said relatively shallow portion and ToA(BW_{1d}) is the time of arrival at the ultrasound inspection device of a first-generation ultrasound echo created by said relatively deep portion.

3. A method as claimed in claim 1 or 2, in which ultrasound step-echo measurement data is the result of an ultrasound echo received at the ultrasound inspection device that has been reflected and/or diffracted by both the relatively shallow portion and the relatively deep portion of the object.

4. A method as claimed in claim 3, in which ultrasound step-echo measurement data is a result of an ultrasound echo received at the ultrasound inspection device that has firstly been reflected by a back-wall feature of one of the relatively shallow or deep portion of the object, then secondly reflected by the front surface, and then thirdly reflected by a back-wall feature of the other of the relatively shallow or deep portion.

5. A method as claimed in any preceding claim, comprising identifying a peak in the step-echo measurement data, and determining information about the step therefrom.

6. A method as claimed in any preceding claim, in which said information comprises location information.

7. A method as claimed in claim 6, in which said location information comprises information about the lateral position of the step.

8. A method as claimed in any preceding claim, further comprising combining the information about the step with other information about the object.

9. A method as claimed in any preceding claim, in which the set of ultrasound echo measurement data was obtained by an ultrasound inspection device mounted on a positioning apparatus, for example a coordinate positioning apparatus.

10. A method as claimed in claims 6 and 9, in which said location information comprises coordinate position information regarding the location of the step in the depth of the part.

11. A method as claimed in claim 10, comprising combing the coordinate positioning information regarding the location of the step in the depth of the part with coordinate position information about at least one other feature of the object.

12. A method as claimed in any preceding claim, in which the set of ultrasound echo measurement data comprises ultrasound echo measurements obtained along a predetermined inspection line.

13. A method as claimed in any preceding claim, further comprising using ultrasound echo measurement data obtained from the front surface to determine information concerning at least one of the thickness of, material structure, or speed of sound within the relatively shallow and/or relatively deep portions of the obj ect.

14. A method as claimed in any preceding claim, comprising the step of using an ultrasound inspection device to obtain said set of ultrasound echo measurement data that extends across the step in the depth of the object.

15. A method as claimed in claim 14, in which the ultrasound inspection device comprises a single transducer for emitting and detecting ultrasound energy so as to obtain an ultrasound echo measurement.
